# EUROPÄISCHE PATENTANMELDUNG

(11) **EP 2 112 759 A2**
(43) Veröffentlichungstag der Anmeldung: **28.10.2009**
(21) Anmeldenummer: 09405063.0
(22) Anmeldetag: 09.04.2009
(51) Int. Cl.: H02N 2/12, H02N 2/04, H01L 41/09

(54) **Piezoelektrischer Motor**

(30) Priorität: 21.04.2008 CH 617082008
(71) Anmelder: Wurm, Helmut, 1716 Schwarzsee (CH)
(72) Erfinder: Wurm, Helmut, 1716 Schwarzsee (CH)
(74) Vertreter: AMMANN PATENTANWÄLTE AG BERN

(57) **Zusammenfassung**

Die Erfindung betrifft einen piezoelektrischer Motor mit einem Abtriebskörper (2, 39, 61), mindestens einem Antriebspiezoelement (6) zur Erzeugung einer Antriebskraft und mindestens zwei Klemmpiezoelementen (14, 52) zur Erzeugung einer Klemmkraft an dem Abtriebskörper (2, 39, 61).

Zur optimierten Kraftübertragung und Vermeidung von Scherkräften wird vorgeschlagen, dass der Abtriebskörper (2, 39, 61) eine ebene Seitenfläche (7, 8, 62, 63) aufweist, welche sich parallel zur Wirkachse (WA) jedes der Antriebspiezoelemente (6) erstreckt und durch welche eine Angriffsfläche für die Klemmkraft gebildet ist, und die Klemmpiezoelemente (14, 52) jeweils derart der Angriffsfläche gegenüberliegend angeordnet sind, dass ihre Wirkachse (WK) senkrecht zur Angriffsfläche gerichtet ist.

## Beschreibung

Die Erfindung betrifft einen piezoelektrischen Motor mit einem Abtriebskörper, mindestens einem Antriebspiezoelement zur Erzeugung einer Antriebskraft und mindestens zwei Klemmpiezoelementen zur Erzeugung einer Klemmkraft an dem Abtriebskörper, insbesondere zur Erzeugung von Antriebskräften bzw. Antriebsleistungen, wie sie beispielsweise für einen elektrischen Walzen-, Fahrzeugoder Rollstuhlantrieb oder ähnlichem benötigt werden.

Ein derartiger piezoelektrischer Motor ist aus der WO 03/005553 A2 bekannt. Hierbei sind entlang des Aussenumfangs eines ringförmigen Abtriebsteils zwei Klemmpiezoelemente und zwei Antriebspiezoelemente angeordnet, die jeweils als eine Mehrzahl benachbarter Piezopakete ausgebildet sind und entlang des Innenumfangs eines ringförmigen Stators befestigt sind. Durch die von den Klemmpiezoelementen erzeugte Klemmkraft ist das Abtriebsteil an dem Stator festlegbar und die von den Antriebspiezoelementen erzeugte Antriebskraft auf das Abtriebsteil übertragbar. Die Anordnung der Klemmpiezoelemente ist derart gewählt, dass ihre Wirkrichtung radial zum ringförmigen Abtriebsteil orientiert ist, während die Wirkrichtung der Antriebspiezoelemente tangential zum Abtriebsteil verläuft, wobei jeweils ein Klemmpiezoelement und ein Antriebspiezoelement mit einem von zwei Klemmschuhen starr verbunden sind. Durch die Klemmschuhe ist jeweils eine Auflagefläche entlang des Aussenumfangs des Abtriebsteils gebildet, durch welche eine Übertragung der Klemm- und Antriebskräfte auf das Abtriebsteil ermöglicht ist. Der bekannte piezoelektrische Motor ist insbesondere für Schwerlastantriebe konzipiert, unter Ausnutzung des Umstands, dass durch piezoelektrische Materialien hohe Drehmomente erzeugbar sind.

Allerdings sind Piezoaktoren mit dem Nachteil sehr geringer Bewegungsamplituden behaftet, die zudem linear gerichtet sind, so dass bei deren Kopplung in den Abtriebskörper das Auftreten von Scherkräften und Toleranzen hinsichtlich der Kraftübertragung möglichst zu vermeiden sind. Jedoch treten bei der Übertragung einer Linearkraft auf die gekrümmte Aussenfläche eines ringförmigen Abtriebskörpers solche Scherkräfte zwangsläufig auf, was neben einem verminderten Wirkungsgrad auch zu einem Bruch der verwendeten Piezokristalle führen kann.

Der Erfindung liegt die Aufgabe zugrunde, einen piezoelektrischen Motor der eingangs genannten Art zu schaffen, bei welchem unter Vermeidung der vorgenannten Nachteile eine optimierte Kraftübertragung von den Piezoelementen auf den Abtriebskörper gewährleistet ist, wobei das Auftreten von Scherkräften weitestgehend vermieden ist.

Diese Aufgabe wird bei einem piezoelektrischen Motor mit den Merkmalen des Oberbegriffs von Patentanspruch 1 dadurch gelöst, dass der Abtriebskörper eine ebene Seitenfläche aufweist, welche sich parallel zur Wirkachse jedes der Antriebspiezoelemente erstreckt und durch welche eine Angriffsfläche für die Klemmkraft gebildet ist, und die Klemmpiezoelemente jeweils derart der Angriffsfläche gegenüberliegend angeordnet sind, dass ihre Wirkachse senkrecht zur Angriffsfläche gerichtet ist.

Durch die gegenüberliegende Anordnung einzelner Klemmpiezoelemente bezüglich der ebenen Angriffsfläche des Abtriebskörpers wird erfindungsgemäss eine möglichst verlustfreie Kraftübertragung auf den Abtriebskörper ermöglicht, welche der linearen Wirkrichtung der Piezoelemente Rechnung trägt.

Um eine direkte Weiterleitung der Kraftwirkung von den Piezoelementen auf den Abtriebskörper zu erzielen, wird weiterhin vorgeschlagen, dass zwischen dem abtriebseitigen Ende der Klemmpiezoelemente und der Angriffsfläche jeweils ein Klemmkörper und an der den Klemmpiezoelementen entgegengesetzten Seite des Abtriebskörpers jeweils ein Klemmgegenkörper zur Kraftübertragung an den Abtriebskörper angeordnet ist. Bevorzugt handelt es sich bei dem Klemmkörper um ein federndes Element, beispielsweise eine Blattfeder, um eine selbstständige Rückstellung des Klemmkörpers nach Beendigung der Kraftbeaufschlagung zu erzielen. In weiterhin bevorzugter Ausführung handelt es sich auch bei dem Klemmgegenkörper um ein federndes Element oder um ein starres Element, beispielsweise einen massiven Metallblock, welches an ein federndes Element gekoppelt ist. Alternativ kann der Klemmgegenkörper auch starr an dem Motorgehäuse befestigt sein.

Zur gleichmässigen Kraftübertragung durch den Klemmkörper und den Klemmgegenkörper auf beiden Seiten des Abtriebskörpers kann vorgesehen sein, dass der Abtriebskörper ein Bewegungsspiel parallel zur Wirkachse der Klemmpiezoelemente aufweist, innerhalb welchem eine Kraftbeaufschlagung des Abtriebskörpers gegen mindestens einen Klemmgegenkörper ermöglicht ist. Beispielweise kann der Abtriebskörper quer zur Antriebsachse schwimmend gelagert sein oder im Bereich der Klemmgegenkörper ein queraxiales Federspiel aufweisen.

Alternativ oder komplementär kann eine beidseitig gleichmässige Übertragung der Klemmkraft entlang der Wirkachse des Klemmpiezoelements dadurch erreicht werden, dass mindestens ein Klemmkörper mit dem abtriebseitigen Ende und mindestens ein Klemmgegenkörper mit dem abtriebsentfernten Ende des zugeordneten Klemmpiezoelements derart wirkverbunden ist, dass durch Ausdehnung des Klemmpiezoelements eine gegenläufige Kraftbeaufschlagung von Klemmkörper und Klemmgegenkörper gegen den Abtriebskörper erzielt ist. Hierzu kann die Wirkverbindung zwischen dem Klemmgegenkörper und dem abtriebsentfernten Ende des Klemmpiezoelements eine Federlagerung an dem Motorgehäuse umfassen, insbesondere eine Blattfeder, die einen Bewegungsfreiheitsgrad entlang der Wirkachse des Klemmpiezoelements aufweist.

Zur Voreinstellung und zur bedarfsmässigen Anpassung des von den Piezoelementen zu übertragenden Kraftmoments wird vorgeschlagen, dass mindestens ein Klemmpiezoelement und/oder ein Antriebspiezoelement durch eine Vorspanneinrichtung, insbesondere eine Blattfeder und/oder eine Tellerfeder, entlang dessen Wirkachse vorbeaufschlagt ist. In einer vorteilhaften Ausgestaltung ist insbesondere vorgesehen, dass die Federlagerung des Klemmgegenkörpers an dem abtriebsentfernten Ende des Klemmpiezoelements durch eine derartige Vorspanneinrichtung gebildet ist.

Gemäss einer Ausführungsform der Erfindung kann ein Schrittmotor durch mindestens eine Antriebseinheit realisiert werden, die zwei Klemmpiezoelemente und ein Antriebspiezoelement umfasst, wobei das Antriebspiezoelement mit beiden Klemmpiezoelementen wirkverbunden ist und wobei die Klemmpiezoelemente zu abwechselnder Kraftbeaufschlagung des Abtriebskörpers ausgebildet sind. Derart ist die Antriebskraft schrittweise in dem Wechseltakt der Kraftübertragung von den Klemmpiezoelementen von dem Antriebspiezoelement in den Abtriebskörper einleitbar.

Ein kontinuierlicher Antrieb kann durch eine Mehrzahl von Antriebseinheiten realisiert werden, die aufeinanderfolgend in Antriebsrichtung entlang der Angriffsfläche angeordnet sind, wobei jede Antriebseinheit mindestens ein Antriebspiezoelement und ein Klemmpiezoelement umfasst, so dass diese jeweils voneinander unabhängig zur Übertragung der Antriebskraft auf den Abtriebskörper ausgebildet sind. Dabei ist vorzugsweise mindestens eine Spannungserzeugungseinheit vorgesehen, durch welche die Antriebseinheiten jeweils phasenverschoben in einer zyklischen Spannungsabfolge ansteuerbar sind, um derart eine kontinuierliche Bewegung auf den Abtriebskörper zu übertragen.

Der erfindungsgemässe Piezomotor kann sowohl als Drehmotor als auch als Linearantrieb eingesetzt werden. Ein Drehmotor kann beispielweise dadurch realisiert werden, dass der Abtriebskörper eine Kreisscheibe umfasst, wobei die Angriffsfläche durch einen konzentrischen Oberflächenabschnitt auf der Kreisscheibe gebildet ist, so dass eine Rotationsbewegung in den Abtriebskörper einleitbar ist. Bei einer derartigen Anordnung des Abtriebskörpers ist neben der ebenförmigen Ausbildung der Angriffsfläche auch die vergrösserte Oberfläche im Vergleich zu einer umfänglich angeordneten Angriffsfläche von Vorteil, wodurch eine erhöhte und stabilere Einleitung der Antriebskraft ermöglicht ist. Bei einem Linearantrieb umfasst der Abtriebskörper mindestens ein Längselement, entlang dessen Erstreckungsrichtung die ebene Angriffsfläche verläuft, so dass eine Translationsbewegung in den Abtriebskörper einleitbar ist.

Nachfolgend ist die Erfindung anhand bevorzugter Ausführungsformen unter Bezugnahme auf die Zeichnungen näher erläutert, anhand welcher sich weitere Eigenschaften und Vorteile der Erfindung ergeben. Die Figuren, die Beschreibung und die Ansprüche enthalten zahlreiche Merkmale in Kombination, die der Fachmann auch einzeln betrachten und zu sinnvollen weiteren Kombinationen zusammenfassen wird. Dabei zeigen:
- Fig. 1:: eine schematische Darstellung eines piezoelektrischen Motors mit einer Antriebseinheit gemäss einer ersten Ausführungsform der Erfindung in einer Schnittansicht;
- Fig. 2:: eine Detailansicht der Antriebseinheit gemäss der ersten Ausführungsform in einer perspektivischen Darstellung;
- Fig. 3:: eine perspektivische Darstellung eines piezoelektrischen Motors mit zwei Antriebseinheiten gemäss der ersten Ausführungsform, bei welchem ein kontinuierlicher Drehantrieb realisiert ist;
- Fig. 4:: der in Fig. 3 gezeigte piezoelektrische Motor in einer Schnittansicht;
- Fig. 5:: eine perspektivische Darstellung eines piezoelektrischen Motors mit zwei Antriebseinheiten gemäss einer zweiten Ausführungsform, bei welchem ein kontinuierlicher Drehantrieb realisiert ist;
- Fig. 6:: der in Fig. 5 gezeigte piezoelektrische Motor in einer Schnittansicht;
- Fig. 7:: eine perspektivische Darstellung eines piezoelektrischen Motors mit einer Antriebseinheit gemäss einer dritten Ausführungsform, durch welchen ein Schrittmotor realisiert ist; und
- Fig. 8:: eine perspektivische Darstellung eines piezoelektrischen Motors, durch welchen ein Linearantrieb realisiert ist.

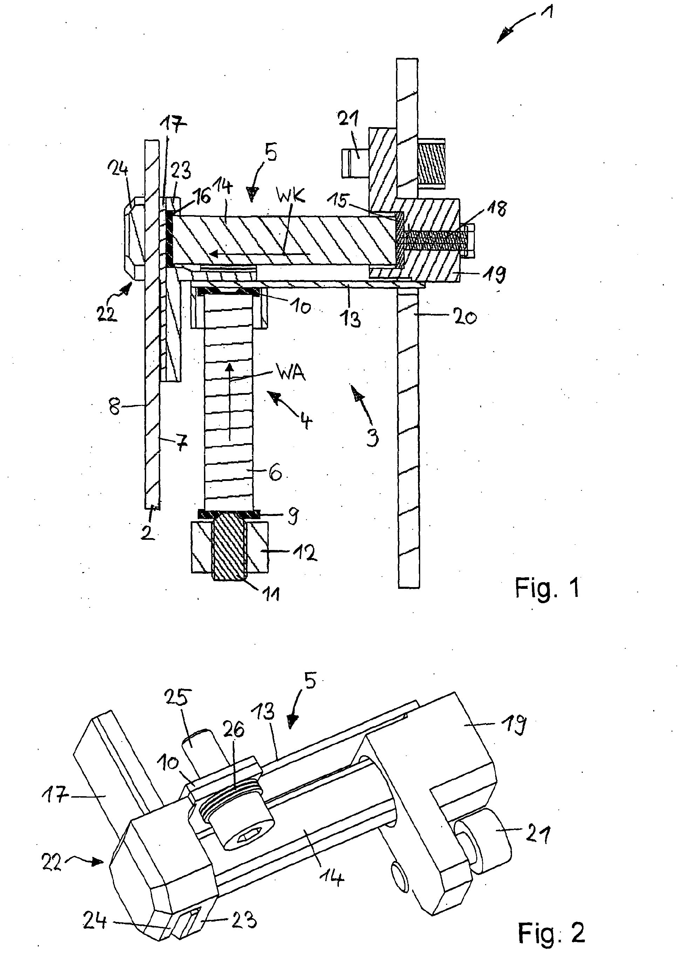

Die Fig. 1 zeigt einen erfindungsgemässen piezoelektrischen Motor 1 in einer schematischen Schnittansicht. Der piezoelektrische Motor 1 umfasst eine kreisförmige Abtriebsscheibe 2, die durch mindestens eine Antriebseinheit 3 in eine Rotationsbewegung versetzbar ist. Hierzu weist die Antriebseinheit 3 einen Antriebsabschnitt 4 zur Erzeugung einer Antriebskraft und einem Klemmabschnitt 5 zur Festlegung der Antriebseinheit 3 an der Abtriebsscheibe 2 auf, wodurch eine Übertragung der Antriebskraft auf die Abtriebsscheibe ermöglicht ist.

Der Antriebsabschnitt 4 umfasst ein Antriebspiezoelement 6, das sich in Längsrichtung parallel zur Abtriebsscheibe 2 entlang der inneren Seitenfläche 7 erstreckt. An seinem hinteren Ende ist am Antriebspiezoelement 6 ein Rückplättchen 9 befestigt und an seinem vorderen Ende ein Stirnplättchen 10, zwischen welchen eine Betriebsspannung am Antriebspiezoelement 6 anlegbar ist. Das Anlegen einer Spannung bewirkt eine Längsausdehnung des Antriebspiezoelements 6, wodurch eine Kraftwirkung parallel zu den Seitenflächen 7, 8 erzeugt wird, so dass die Längsachse des Antriebspiezoelements 6 im Folgenden als Wirkachse WA bezeichnet wird. Bei dem Antriebspiezoelement 6 handelt es sich bevorzugt um einen Piezostapel, bei welchem eine Mehrzahl von Piezoaktoren in einer Sandwichanordnung hintereinander gereiht ist, um möglichst grosse Bewegungsamplituden zu erzielen.

Der Antriebsabschnitt 4 ist am Rückplättchen 9 durch eine Vorspannschraube 11 mit dem statischen Motorgehäuse 12 verbunden. Über die Vorspannschraube 11 ist eine Vorspannung des Antriebspiezoelements 6 entlang dessen Wirkachse WA beliebig einstellbar. An der Frontseite des Stirnplättchens 10 ist eine Vorschubplatte 13, beispielsweise in Form einer Blattfeder, zur Weiterleitung der Antriebskraft an den Klemmabschnitt 5 angeordnet.

Der Klemmabschnitt 5 umfasst ein Klemmpiezoelement 14, das sich in Längsrichtung parallel zur Blattfeder erstreckt und dessen Bauweise im Wesentlichen derjenigen des Antriebspiezoelements 6 entspricht. Das Klemmpiezoelement 14 ist der inneren Seitenfläche 7 der Abtriebsscheibe 2 gegenüberliegend angeordnet, wobei sich seine Wirkachse WK senkrecht zu den Seitenflächen 7, 8 erstreckt. Durch Anlegen einer Spannung zwischen dem Rückplättchen 15 und dem Stirnplättchen 16 des Klemmpiezoelements 14 wird somit eine Klemmkraft erzeugt, die zur Antriebskraft quergerichtet ist.

Zum Übertragen der Klemmkraft auf die innere Seitenfläche 7 der Abtriebsscheibe 2 ist an der Frontseite des Stirnplättchens 16 eine Blattfeder angeordnet, durch die derart ein Klemmkörper 17 gebildet ist. Das Rückplättchen 15 ist durch eine Vorspannschraube 18 mit einem Befestigungsblock 19 verschraubt, der wiederum durch eine Schraubverbindung 21 an einer Blattfeder 20 befestigt ist. Die Blattfeder 20 ist am statischen Motorgehäuse 12 gelagert, so dass sie einen Bewegungsfreiheitsgrad entlang der Wirkachse WK des Klemmpiezoelements 14 aufweist.

Die Vorschubplatte 13 ist am hinteren Endabschnitt mit dem Befestigungsblock starr verbunden, während sie vorderseitig an einem Gabelblock 22 starr befestigt ist. Der Gabelblock 22 weist im Wesentlichen einen U-förmigen Querschnitt mit zwei Seitenbacken 23, 24 auf, welche die Abtriebsscheibe 2 beidseitig umgreifen. Zwischen der inneren Seitenbacke 23 und der inneren Seitenfläche 7 der Abtriebsscheibe 2 ist der Klemmkörper 17 angeordnet. Durch die Ausbildung des Klemmkörpers 17 als Blattfeder besteht ein Bewegungsfreiheitsgrad desselben entlang der Wirkachse WK des Klemmpiezoelements 14. Die äussere Seitenbacke des Gabelblocks 22 schliesst direkt an die äussere Seitenfläche 8 der Abtriebsscheibe 2 an und bildet einen Klemmgegenkörper 24 zur aussenseitigen Übertragung der Klemmkraft.

Die Fig. 2 zeigt eine perspektivische Darstellung des vorangehend beschriebenen Klemmabschnitts 5 der Antriebseinheit 1. Darin ist insbesondere der u-förmige Querschnitt des Gabelblocks 22 näher ersichtlich, der zum beidseitigen Umgreifen der Abtriebsscheibe 2 ausgebildet ist und entlang dessen innerer Seitenbacke 23 der Klemmkörper 17 angeordnet ist. Weiterhin geht aus dieser Darstellung die Vorspannschraube 25 hervor, die als Befestigungsmittel des Stirnplättchens 10 des Antriebspiezoelements 6 an der Antriebsfeder 13 dient. Zur Einstellung einer geeigneten Vorspannung kann jede der vorgenannten Vorspannschrauben 11, 18 und 25 mit einer Tellerfeder 26 versehen sein. Dadurch lässt sich das von den Piezolementen 6, 14 zu übertragende Kraftmoment bedarfsweise anpassen. Ebenso können die Blattfedern 13, 17 und 20 zur Vorspannwirkung beitragen.

Im Folgenden wird anhand der schematischen Darstellung in Fig. 1 die Funktionsweise der Antriebseinheit 3 näher erläutert. In einem ersten Schritt wird durch Anlegen einer Spannung am Klemmpiezoelement 14 eine Längsausdehnung desselben entlang dessen Wirkachse WK erzielt und der Klemmkörper 17 gegen die Abtriebsscheibe 2 beaufschlagt. Gleichzeitig wird hierdurch eine Rückstellkraft am Klemmpiezoelement 14 hervorgerufen, die in die entgegengesetzte Richtung wirkt. Durch die federnde Lagerung des Klemmpiezoelements 14 am Motorgehäuse 12 über die Blattfeder 20 erfolgt somit eine Beaufschlagung der am Klemmpiezoelement 14 befestigten Bauteile in Richtung der Rückstellkraft. Dadurch wird der Klemmgegenkörper 24 des Gabelblocks 22 gegen die äussere Seitenfläche 8 der Abtriebsscheibe 2 beaufschlagt, da der Gabelblock 22 mit dem abtriebsentfernten Ende des Klemmpiezoelements 14 durch die Vorschubfeder 13 und den Befestigungsblock 19 wirkverbunden ist. Auf diese Weise wird die von dem Klemmpiezoelement 14 erzeugte Klemmkraft von beiden Seiten homogen durch den Klemmkörper 17 und den Klemmgegenkörper 24 auf die Abtriebsscheibe 2 übertragen. Dabei ist durch die direkte Anordnung des Klemmpiezoelements 14 gegenüber den ebenen Seitenflächen 7, 8 des Abtriebskörpers 2 das Auftreten von Scherkräften wirkungsvoll vermieden.

In einem zweiten Schritt wird durch Anlegen einer Spannung am Antriebspiezoelement 6 eine Längsausdehnung desselben entlang dessen Wirkachse WA hervorgerufen. Dabei wird die so erzeugte Antriebskraft vollständig auf die frontseitig angeordnete Vorschubplatte 13 und den daran befestigten Klemmabschnitt 5 übertragen, da das Antriebspiezoelement 6 rückseitig eine starre Verbindung mit dem Motorgehäuse 12 aufweist. Derart wird die Antriebskraft von dem Antriebspiezoelement 6 über den Klemmabschnitt 5 in die daran festgelegte Abtriebsscheibe 2 eingeleitet. Durch die direkte Anordnung des Antriebspiezoelements 6 an der eben ausgebildeten Vorschubplatte 13 ist auch hier das Auftreten von Scherkräften wirkungsvoll vermieden.

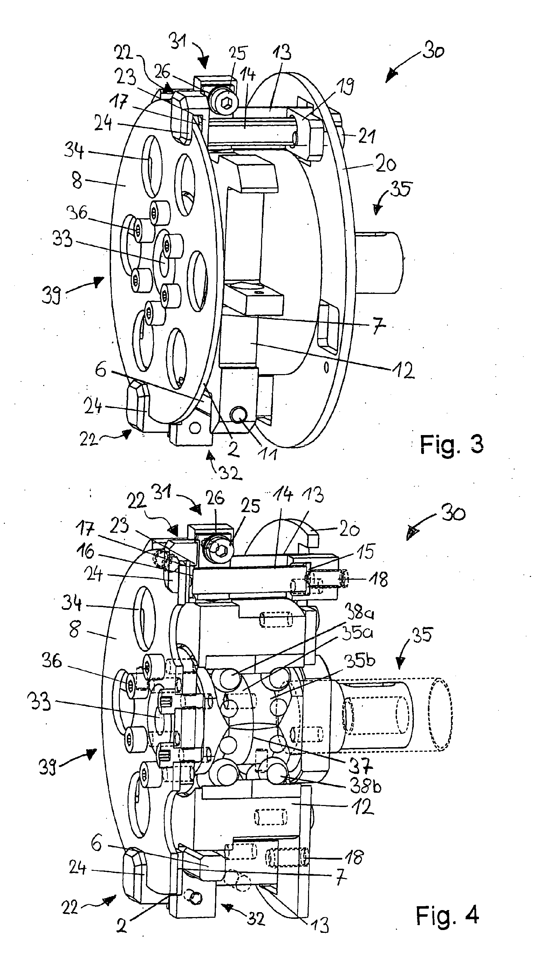

Die Fig. 3 zeigt eine perspektivische Darstellung und die Fig. 4 eine Schnittansicht eines Drehmotors 30, bei welchem zwei Antriebseinheiten 31, 32 zum Einsatz kommen, um eine kontinuierliche Rotationsbewegung in die Abtriebsscheibe 2 einzuleiten. Die Antriebseinheiten 31, 32 entsprechen in ihrem jeweiligen Aufbau im Wesentlichen der in Fig. 1 und Fig. 2 gezeigten und vorangehend erläuterten Antriebseinheit 3, wobei identische Bauteile jeweils mit dem gleichen Bezugszeichen versehen sind.

Der Drehmotor 30 umfasst eine Abtriebsscheibe 2, die um eine Drehachse 33 rotierbar gelagert ist. Zur Gewichtseinsparung weist die Abtriebsscheibe 2 eine Mehrzahl kreisförmiger Durchbrüche 34 auf, die in jeweils gleichem Abstand zur Drehachse 33 angeordnet sind. Die Abtriebsscheibe 2 ist durch eine Mehrzahl von Schraubverbindungen 36 mit einer Welle 35 starr verbunden, die sich gehäuseinnenseitig entlang der Drehachse 33 senkrecht zu den Seitenflächen 7, 8 der Abtriebsscheibe 2 erstreckt. Die Drehwelle 35 ist zweiteilig ausgebildet und umfasst eine Anpressfläche 37 entlang dem Querschnittsende ihrer beiden aneinander anschliessenden Bauteile 35a, 35b. Um Reibungsverluste während der Wellenbewegung im Motorgehäuse 12 gering zu halten, ist aussenumfänglich an beiden Seiten der Anpressfläche 37 jeweils ein Schrägkugellager 38a, 38b in einer O-Anordnung vorhanden.

Die Antriebseinheiten 31, 32 sind spiegelsymmetrisch am Aussenumfang der Abtriebsscheibe 2 angeordnet, so dass die Abtriebsscheibe 2 an zwei gegenüberliegenden Seiten von den jeweiligen Gabelblöcken 22 umgriffen wird. Durch die Abtriebsscheibe 2 und die Welle 35 ist der Abtriebskörper 39 gebildet, bei welchem der jeweils in die Gabelblöcke 22 eingreifende Abschnitt der ebenen Seitenflächen 7, 8 als Angriffsfläche zur Kraftübertragung dient.

Durch die beschriebene Anordnung ist das Einleiten einer kontinuierlichen Rotationsbewegung in den Abtriebskörper 39 ermöglicht, wobei die Antriebskraft in der vorangehend beschriebenen Weise jeweils abwechselnd oder zeitlich überlappend von den zwei Antriebseinheiten 31, 32 zur Verfügung gestellt wird. Hierzu wird in einem ersten Schritt jeweils eine der beiden Antriebseinheiten 31, 32 durch Längsausdehnung des zugeordneten Klemmpiezoelements 14 an der Abtriebsscheibe 2 festgelegt. In einem zweiten Schritt wird die Antriebskraft von dem zugeordneten Antriebspiezoelement 6 auf die Abtriebsscheibe 2 übertragen.

Im dritten Schritt wird das Klemmpiezoelement 14 der aktiven Antriebseinheit 31, 32 in seine nicht ausgedehnte Länge zurückgeführt, so dass dessen Klemmwirkung aufgehoben wird. Im vierten Schritt wird das zugeordnete Antriebspiezoelement 6 in seine Ausgangslänge zurückgeführt und das Verfahren an dieser Antriebseinheit mit Schritt 1 fortgesetzt. An der jeweils anderen der beiden Antriebseinheiten 31, 32 wird das gleiche Verfahren durch Ansteuerung desselben in einer zeitlichen Phasenverschiebung durchgeführt, wodurch die kontinuierliche Bewegung ermöglicht wird.

Beispielsweise kann die phasenverschobene Ansteuerung der Antriebseinheiten 31, 32 derart gewählt sein, dass während der Durchführung des zweiten Schrittes an der ersten Antriebseinheit 31 der vierte Schritt an der zweiten Antriebseinheit 32 durchgeführt wird. Dies kann insbesondere durch Anlegen einer jeweils sinusähnlichen Spannung an den zugeordneten Antriebspiezoelementen 6 der Antriebseinheiten 31, 32 realisiert sein, welche beispielsweise eine gegenseitige Phasenverschiebung um den Wert Π aufweisen.

Weiterhin ist die Anordnung einer oder mehrerer zusätzlicher Antriebseinheiten neben den Antriebseinheiten 31, 32 entlang des Aussenumfangs der Abtriebsscheibe 2 denkbar, die jeweils in der beschriebenen Weise betrieben werden. Dadurch kann die Ansteuerungsfrequenz einer jeweiligen Antriebseinheit 31, 32 niedriger gehalten werden, um dennoch die gewünschte Drehgeschwindigkeit des Abtriebskörpers zu erhalten. Dies ist insbesondere bei Anwendungen vorteilhaft, bei welchen die technischen Grenzen einer Ansterungsfrequenz von ca. 30 bis 40 kHz nicht ausreichend sind.

Ferner ist eine Ansteuerung der Antriebseinheiten 31, 32 denkbar, durch welche die jeweilige Übertragung der Antriebskraft gemäss dem genannten zweiten Schritt zeitlich überlappend durchgeführt wird. Beispielsweise kann dies durch eine gegenseitige Phasenverschiebung der jeweiligen Ansteuerungsfrequenz realisiert sein, welche den Wert II unterschreitet, oder durch unterschiedliche Ansteuerungsfrequenzen an den jeweiligen Antriebseinheiten 31, 32. Derart lässt sich eine Erhöhung des insgesamt übertragenen Antriebsmoments erzielen.

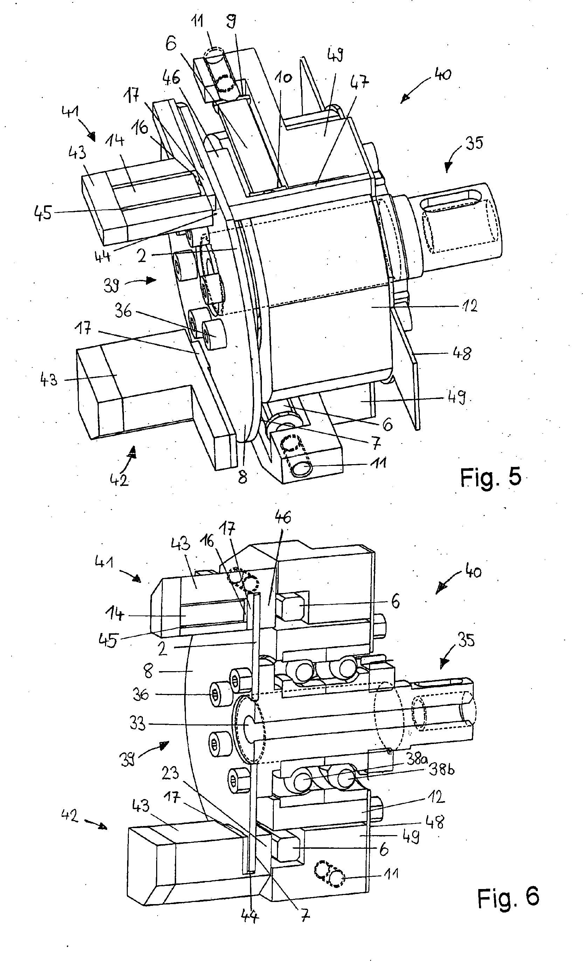

Die Fig. 5 zeigt eine perspektivische Ansicht mit einem Teilschnitt und die Fig. 6 eine Schnittansicht eines kontinuierlichen Drehmotors 40 mit zwei identisch ausgebildeten Antriebseinheiten 41, 42 gemäss einer zweiten Ausführungsform der Erfindung. Dabei sind entsprechende Bauteile bezüglich der vorangehend diskutierten Ausführungsbeispiele mit dem gleichen Bezugszeichen versehen.

Jede der Antriebseinheiten 41, 42 umfasst jeweils einen Halterungsblock 43, in dessen Mittelbereich eine vertikale Einsparung 44 vorgesehen ist, in welche die Abtriebsscheibe 2 mit ihrem äusseren Radialabschnitt eingreift. Durch den eingreifenden Abschnitt der Abtriebsscheibe 2 ist eine Angriffsfläche zur Kraftübertragung von den Antriebseinheiten 41, 42 gebildet.

In einem hohlförmigen Innenraum 45 des Halterungsblocks 43 ist jeweils das Klemmpiezoelement 14 gegenüber der äusseren Seitenfläche 8 der Abtriebsscheibe 2 angeordnet, so dass dessen Wirkachse WK jeweils senkrecht darauf gerichtet ist. An seinem abtriebsentfernten Ende ist das Klemmpiezoelement 14 jeweils starr am Halterungsblock 43 befestigt. Am abtriebsseitigen Ende des Klemmpiezoelements 14 ist das Stirnplättchen 16 befestigt. Zwischen dem Stirnplättchen 16 und der äusseren Seitenfläche 8 der Abtriebsscheibe 2 ist jeweils eine Blattfeder angeordnet, durch die ein jeweiliger Klemmkörper 17 gebildet ist. An seinem hinteren Ende ist der Klemmkörper 17 am jeweiligen Halterungsblock 43 befestigt.

Entlang der Innenseite 7 der Abtriebsscheibe 2 weist der Halterungsblock 43 jeweils einen kontinuierlichen Querabschnitt 46 auf, der direkt an die Abtriebsscheibe 2 angrenzt. Der Mittelbereich des Querabschnitts 46 ist dem Klemmkörper 17 gegenüberliegend angeordnet, so dass durch den Querabschnitt der Klemmgegenkörper 46 gebildet ist. An seinem vorderen Ende in Antriebsrichtung der Abtriebsscheibe 2 mündet der Klemmgegenkörper 46 in einen Längssteg 47, der die Funktion der Vorschubplatte 13 in Fig. 1 übernimmt, und der sich von der Innenseite der Abtriebsscheibe 2 in senkrechter Richtung zur Aussenwand 48 des Motorgehäuses 12 erstreckt.

An der Aussenwand 48 ist hinter dem Längssteg 47 ein hohlförmiger Befestigungsblock 49 angeordnet, in dessen Hohlraum das Antriebspiezoelement 6 durch die Vorspannschraube 11 am Rückplättchen 9 befestigt ist. Das Antriebspiezoelement 6 erstreckt sich parallel zu den Seitenflächen 7, 8 der Abtriebsscheibe 2 und weist an seinem vorderen Ende das Stirnplättchen 10 auf, das direkt an den Längssteg 47 zu dessen Kraftbeaufschlagung angrenzt.

Bei dem Drehmotor 40 ist der jeweilige Klemmgegenkörper 46 der Antriebseinheiten 41, 42 starr mit dem Motorgehäuse 12 verbunden. Die Antriebsscheibe 2 ist als Blattfeder ausgebildet und weist derart ein queraxiales Bewegungsspiel in Richtung der Klemmgegenkörper 46 auf.

Nachfolgend ist die Funktionsweise der Antriebseinheiten 41, 42 näher erläutert. In einem ersten Schritt wird durch Anlegen einer Spannung an dem Klemmpiezoelement 14 der jeweiligen Antriebseinheit 41, 42 der Klemmkörper 17 gegen die Abtriebsscheibe 2 beaufschlagt. Durch das queraxiale Federspiel der Abtriebsscheibe 2 wird diese gegen den jeweiligen Klemmgegenkörper 46 gedrückt, wodurch eine beidseitig homogene Übertragung der Klemmkraft auf die Abtriebsscheibe 2 erzielt ist. In einem zweiten Schritt wird die durch Anlegen einer Spannung an dem zugeordneten Antriebspiezoelement 6 erzeugte Antriebskraft auf die Abtriebsscheibe 2 übertragen, die durch die übertragene Klemmkraft an der jeweiligen Antriebseinheit 41, 42 festgelegt ist.

In einer weiteren Ausführungsform der Erfindung ist die Aussenwand 48 als Blattfeder ausgebildet, wodurch ein axiales Bewegungsspiel des daran festgelegten Befestigungsblocks 49 erzielt ist. Dadurch wird bei einer Kraftbeaufschlagung des Klemmkörpers 17 durch das Klemmpiezoelement 14 gegen die äussere Seitenfläche der Abtriebsscheibe 2 gleichzeitig der Klemmgegenkörper 46 gegen die innere Seitenfläche 7 gedrückt. Derart ist eine beidseitige Klemmwirkung an der Abtriebsscheibe 2 bewirkt, wobei die Abtriebsscheibe bezüglich der Drehachse 33 entweder starr befestigt sein kann, oder gemäss der voranstehenden Beschreibung selbst als Blattfeder ausgebildet sein kann, um selbst ein axiales Bewegungsspiel aufzuweisen.

Durch die tangentiale Anordnung von zwei oder mehreren Antriebseinheiten 41, 42 entlang des Aussenumfangs der Abtriebsscheibe 2 lässt sich auf diese Weise, analog zur vorangehend beschriebenen Ausführungsform bzgl. den Figg. 3 und 4, eine kontinuierliche Drehbewegung des Abtriebskörpers 39 verwirklichen.

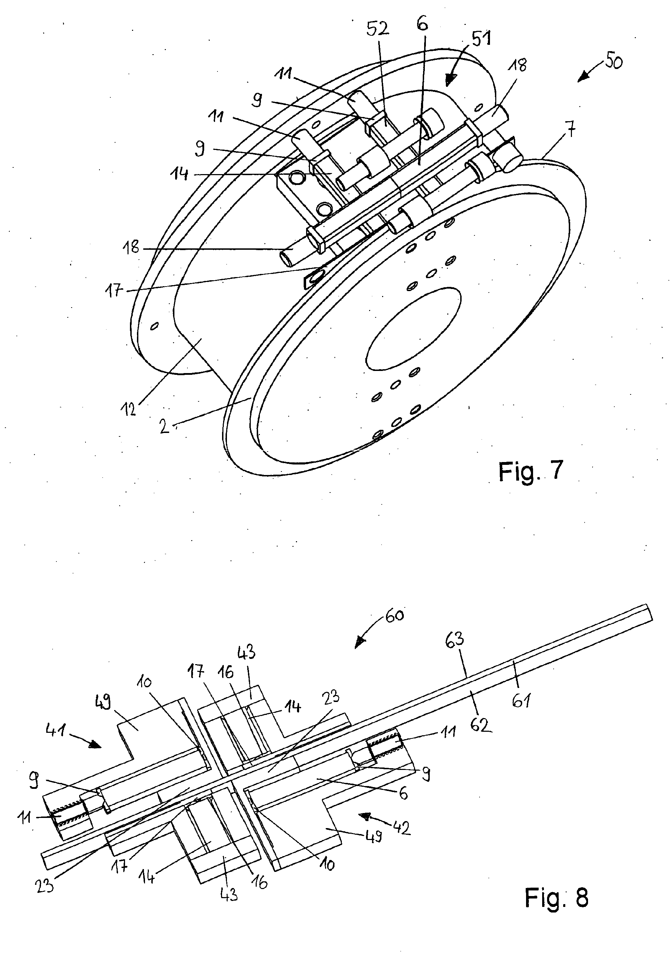

Die Fig. 7 zeigt eine perspektivische Darstellung eines piezoelektrischen Schrittmotors 50 mit einer Antriebseinheit 51 gemäss einer dritten Ausführungsform der Erfindung, wobei identische Bauteile bzgl. den in den Figg. 1 bis 6 dargestellten Ausführungsformen jeweils mit dem gleichen Bezugszeichen versehen sind.

Die Antriebseinheit 51 entspricht in ihrem Grundaufbau im Wesentlichen der in Fig. 1 schematisch dargestellten Antriebseinheit 7, wobei das Antriebspiezoelement 6 parallel und das Klemmpiezoelement 14 senkrecht zur inneren inneren Seitenfläche 7 der Abtriebsscheibe 2 angeordnet sind. Jedoch ist ein zweites Klemmpiezoelement 52 vorhanden, dessen Wirkachse sich parallel zu der Wirkachse WK des Klemmpiezoelements 14 erstreckt und dessen abtriebsseitiges Ende der inneren Seitenfläche 7 gegenüberliegt.

Durch die Antriebseinheit 51 ist ein Betrieb des Piezoantriebs 50 als Schrittmotor ermöglicht. Dabei wird in einem ersten Schritt durch Längsausdehnung des Klemmpiezoelements 14 die Klemmkraft auf die Abtriebsscheibe 2 übertragen, während sich das zweite Klemmpiezoelement 52 in seinem nicht gedehnten Zustand befindet. Dadurch ist das Antriebspiezoelement 6 durch den Klemmkörper 17 und dem zugeordneten Klemmgegenkörper nur in dem Bereich des abtriebsseitigen Endes des Klemmpiezoelements 14 an der Abtriebsschreibe 2 festgelegt. In einem zweiten Schritt wird durch Längsausdehnung des Antriebspiezoelements 6 die Antriebskraft in die Abtriebsscheibe 2 eingeleitet und um die entsprechende Bewegungsamplitude in Antriebsrichtung fortbewegt. In einem dritten Schritt wird eine Längsausdehnung des zweiten Klemmpiezoelements 52 hervorgerufen, so dass das ausgedehnte Antriebspiezoelement 6 nun an den zwei entsprechenden Bereichen des Klemmkörpers 17 und des zugeordneten Klemmgegenkörpers an der Abtriebsscheibe 2 festgelegt ist. In einem vierten Schritt wird das Klemmpiezoelement 14 und das Antriebspiezoelement 6 in seinen jeweils nicht ausgedehnten Zustand zurückgeführt. Das Verfahren wird nun mit dem ersten Schritt fortgesetzt, wodurch ein schrittweises Einleiten der Antriebskraft in dem Wechseltakt der Kraftübertragung durch die Klemmpiezoelemente 14, 52 erzielt ist.

Die Fig. 8. zeigt eine perspektivische Darstellung eines piezoelektrischen Linearantriebs 60, wobei identische Bauteile bezüglich den vorangehend erläuterten Ausführungsbeispielen mit dem gleichen Bezugszeichen versehen sind.

Der Linearantrieb 60 umfasst zwei Antriebseinheiten 41, 42, die im Wesentlichen identisch zu den in den Figg. 5 und 6 gezeigten Antriebseinheiten des Drehmotors 40 ausgebildet sind. Die Antriebseinheiten 41, 42 sind derart in Längsrichtung eines Abtriebsbands 61 hintereinandergereiht, dass der jeweilige Klemmkörper 17 und der zugeordnete Klemmgegenkörper 23 direkt an die zwei gegenüberliegenden ebenene Seitenflächen 62, 63 des Abtriebsbandes 61 angrenzt. Dabei sind die Antriebseinheiten 41, 42 spiegelverkehrt bezüglich einer auf den Seitenflächen 62, 63 senkrecht stehenden Querachse angeordnet. Dadurch ist durch eine analoge Ansteuerung der Antriebseinheiten 41, 42 in der vorangehend beschriebenen Weise ein kontinuierlicher Linearantrieb des Abtriebsbandes 61 ermöglicht.

### Bezugszeichenliste

- 1: piezoelektrischer Motor
- 2: Abtriebsscheibe
- 3: Antriebseinheit
- 4: Antriebsabschnitt
- 5: Klemmabschnitt
- 6: Antriebspiezoelement
- 7: innere Seitenfläche der Abtriebsscheibe
- 8: äussere Seitenfläche der Abtriebsscheibe
- 9: Rückplättchen des Antriebspiezoelements
- 10: Stirnplättchen des Antriebspiezoelements
- 11: Vorspannschraube
- 12: Motorgehäuse
- 13: Vorschubplatte
- 14: Klemmpiezoelement
- 15: Rückplättchen des Klemmpiezoelements
- 16: Stirnplättchen des Klemmpiezoelements
- 17: Klemmkörper
- 18: Vorspannschraube
- 19: Befestigungsblock
- 20: Blattfeder
- 21: Schraube
- 22: Gabelblock
- 23: Klemmgegenkörper
- 25: Vorspannschraube
- 26: Tellerfeder
- 30: Drehmotor
- 31: erste Antriebseinheit
- 32: zweite Antriebseinheit
- 33: Drehachse
- 34: Durchbrüche
- 35: Welle
- 35a, b: Wellenteile
- 36: Schraubverbindungen
- 37: Anpressfläche
- 38a, b: Schrägkugellager
- 39: Abtriebskörper
- 40: Drehmotor
- 41: erste Antriebseinheit
- 42: zweite Antriebseinheit
- 43: Halterungsblock
- 44: vertikale Einsparung
- 45: hohlförmiger Innenraum
- 46: Klemmgegenkörper
- 47: Längssteg
- 48: Gehäuseaussenwand
- 49: hohlförmiger Befestigungsblock
- 50: Schrittmotor
- 51: Antriebseinheit
- 52: zweites Antriebspiezoelement
- 60: Linearantrieb
- 61: Abtriebsband
- 62, 63: ebene Seitenflächen

- WK: Wirkachse des Klemmpiezoelements
- WA: Wirkachse des Antriebspiezoelements

## Patentansprüche

1. Piezoelektrischer Motor mit einem Abtriebskörper (2, 39, 61), mindestens einem Antriebspiezoelement (6) zur Erzeugung einer Antriebskraft und mindestens zwei Klemmpiezoelementen (14, 52) zur Erzeugung einer Klemmkraft an dem Abtriebskörper (2, 39, 61), **dadurch gekennzeichnet, dass** der Abtriebskörper (2, 39, 61) eine ebene Seitenfläche (7, 8, 62, 63) aufweist, welche sich parallel zur Wirkachse (WA) jedes der Antriebspiezoelemente (6) erstreckt und durch welche eine Angriffsfläche für die Klemmkraft gebildet ist, und die Klemmpiezoelemente (14, 52) jeweils derart der Angriffsfläche gegenüberliegend angeordnet sind, dass ihre Wirkachse (WK) senkrecht zur Angriffsfläche gerichtet ist.

2. Piezoelektrischer Motor nach Anspruch 1, **dadurch gekennzeichnet, dass** zwischen dem abtriebseitigen Ende der Klemmpiezoelemente (14, 52) und der Angriffsfläche jeweils ein Klemmkörper (17) und an der den Klemmpiezoelementen (14, 52) entgegengesetzten Seite des Abtriebskörpers (2, 39, 61) jeweils ein Klemmgegenkörper (23, 46) zur Kraftübertragung an den Abtriebskörper (2, 39, 61) angeordnet ist.

3. Piezoelektrischer Motor nach Anspruch 2, **dadurch gekennzeichnet, dass** der Klemmkörper (17) und/oder der Klemmgegenkörper (23, 46) durch ein federndes Element, insbesondere eine Blattfeder, gebildet ist.

4. Piezoelektrischer Motor nach Anspruch 3, **dadurch gekennzeichnet, dass** der Klemmkörper (17) oder der Klemmgegenkörper (23, 46) durch ein starres Element, insbesondere einen Metallblock, gebildet ist.

5. Piezoelektrischer Motor nach einem der Ansprüche 2 bis 4, **dadurch gekennzeichnet, dass** der Abtriebskörper (2, 39, 61) ein Bewegungsspiel parallel zur Wirkachse (WK) der Klemmpiezoelemente (14, 52) aufweist, innerhalb welchem eine Kraftbeaufschlagung des Abtriebskörpers (2, 39, 61) gegen mindestens einen Klemmgegenkörper (23, 46) ermöglicht ist.

6. Piezoelektrischer Motor nach einem der Ansprüche 2 bis 5, **dadurch gekennzeichnet, dass** mindestens ein Klemmkörper (17) mit dem abtriebseitigen Ende und mindestens ein Klemmgegenkörper (23, 46) mit dem abtriebsentfernten Ende des zugeordneten Klemmpiezoelements (14, 52) derart wirkverbunden ist, dass durch Ausdehnung des Klemmpiezoelements (14, 52) eine gegenläufige Kraftbeaufschlagung von Klemmkörper (17) und Klemmgegenkörper (23, 46) gegen den Abtriebskörper (2, 39, 61) erzielt ist.

7. Piezoelektrischer Motor nach Anspruch 6, **dadurch gekennzeichnet, dass** die Wirkverbindung zwischen dem Klemmgegenkörper (23, 46) und dem abtriebsentfernten Ende des Klemmpiezoelements (14, 52) eine Federlagerung (20) an dem Motorgehäuse (12) umfasst, insbesondere eine Blattfeder, die einen Bewegungsfreiheitsgrad entlang der Wirkachse (WK) des Klemmpiezoelements (14, 52) aufweist.

8. Piezoelektrischer Motor nach einem der Ansprüche 1 bis 7, **dadurch gekennzeichnet, dass** mindestens ein Klemmpiezoelement (14, 52) und/oder ein Antriebspiezoelement (6) durch eine Vorspanneinrichtung (18, 25, 26, 20), insbesondere eine Blattfeder und/oder eine Tellerfeder, entlang dessen Wirkachse (WK, WA) beaufschlagt ist.

9. Piezoelektrischer Motor nach Anspruch 7 und 8, **dadurch gekennzeichnet, dass** die Federlagerung (18, 25, 26, 20) des Klemmpiezoelements (14, 52) durch dessen Vorspanneinrichtung (20) gebildet ist.

10. Piezoelektrischer Motor nach einem der Ansprüche 1 bis 9, **gekennzeichnet durch** mindestens eine Antriebseinheit (51), die zwei Klemmpiezoelemente (14, 52) und ein Antriebspiezoelement (6) umfasst, wobei das Antriebspiezoelement (6) mit beiden Klemmpiezoelementen (14, 52) wirkverbunden ist und wobei die Klemmpiezoelemente (14, 52) zu abwechselnder Kraftbeaufschlagung des Abtriebskörpers (2, 39, 61) ausgebildet sind.

11. Piezoelektrischer Motor nach einem der Ansprüche 1 bis 10, **gekennzeichnet durch** eine Mehrzahl von Antriebseinheiten (3, 31, 32, 41, 42, 51), die aufeinanderfolgend in Antriebsrichtung entlang der Angriffsfläche angeordnet sind, wobei jede Antriebseinheit (3, 31, 32, 41, 42, 51) mindestens ein Antriebspiezoelement (6) und ein Klemmpiezoelement (14, 52) umfasst.

12. Piezoelektrischer Motor nach Anspruch 11, **gekennzeichnet durch** eine Spannungserzeugungseinheit, **durch** welche die Antriebseinheiten (3, 31, 32, 41, 42, 51) jeweils phasenverschoben in einer zyklischen Spannungsabfolge ansteuerbar sind, um derart eine kontinuierliche Bewegung auf den Abtriebskörper (2, 39, 61) zu übertragen.

13. Piezoelektrischer Motor nach einem der Anprüche 1 bis 12, **dadurch gekennzeichnet, dass** der Abtriebskörper (2, 39, 61) eine Kreisscheibe oder ein Kreisscheibenteilstück umfasst, wobei die Angriffsfläche durch einen Oberflächenabschnitt (7, 8) der Kreisscheibe oder des Kreisscheibenteilstücks gebildet ist, so dass eine Rotationsbewegung in den Abtriebskörper (2, 39, 61) einleitbar ist.

14. Piezoelektrischer Motor nach einem der Anprüche 1 bis 13, **dadurch gekennzeichnet, dass** der Abtriebskörper (2, 39, 61) ein Längselement (61) umfasst, entlang dessen Erstreckungsrichtung die Angriffsfläche verläuft, so dass eine Translationsbewegung in den Abtriebskörper (2, 39, 61) einleitbar ist.
